(19) Europäisches Patentamt / European Patent Office / Office européen des brevets

(11) **EP 4 616 824 A1**

(12) **DEMANDE DE BREVET EUROPEEN**

(43) Date de publication:
**17.09.2025 Bulletin 2025/38**

(21) Numéro de dépôt: **25163620.5**

(22) Date de dépôt: **13.03.2025**

(51) Classification Internationale des Brevets (IPC):
**A61C 5/50** (2017.01)

(52) Classification Coopérative des Brevets (CPC):
**A61C 5/50; A61C 5/42;** A61C 5/44

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **13.03.2024 FR 2402516**

(71) Demandeur: **Micro-Mega International**
**25000 Besancon (FR)**

(72) Inventeurs:
• **CLAUDE, Stéphane**
**1634 LA ROCHE (CH)**
• **MC MAHON, Tara**
**1380 LASNE (BE)**
• **PÉREZ, Fabienne**
**44000 NANTES (FR)**

(74) Mandataire: **Icosa**
**83 avenue Denfert-Rochereau**
**75014 Paris (FR)**

(54) **AIGUILLE D'IRRIGATION AVEC BUTEE CANALAIRE**

(57) L'invention concerne un aiguille (10) d'irrigation pour canal radiculaire (21), l'aiguille (10) comprenant un corps (13) traversé par un conduit (14) s'étendant selon un axe longitudinal (A13) du corps (13), le conduit (14) reliant une extrémité proximale (12) et une extrémité distale (11) du corps (13), dans laquelle une extrémité distale (11) présente une butée (17) canalaire configurée pour venir en butée (17) contre une surface interne (21i) du canal radiculaire lorsque l'aiguille (10) est insérée au sein du canal radiculaire depuis la chambre pulpaire et en direction de l'apex, jusqu'à une position de blocage au sein du canal radiculaire, de manière que la pointe (15) soit en retrait de l'apex selon un recul non nul.

[Fig.2]

# Description

## DOMAINE DE L'INVENTION

La présente invention concerne les aiguilles d'irrigation utilisées lors de traitements endodontiques.

## ÉTAT DE LA TECHNIQUE

Lors d'un traitement endodontique, il est nécessaire de nettoyer le canal radiculaire avant de procéder à son obturation.

L'irrigation du canal est effectuée avec un fluide du type solution d'hypochlorite de sodium. Des débris pouvant être présents au sein du canal sont évacués par le fluide, et l'action désinfectante de l'hypochlorite de sodium élimine les germes susceptibles de générer une infection au sein du canal après son obturation, généralement au niveau de l'apex du canal.

Les instruments d'irrigation doivent être placés à proximité de l'apex du canal radiculaire afin de nettoyer correctement l'intégralité du canal, depuis l'apex jusqu'à la chambre pulpaire.

En revanche, la solution d'irrigation et les débris ne doivent pas être entrainés au-delà de l'apex, afin de ne pas créer d'hémorragie ou de site d'infection au niveau du péri apex.

Il est connu de l'art antérieur d'utiliser des butées proximales destinées à venir à l'encontre de la face occlusale de la dent, généralement sous la forme d'une bague en matériau élastomère permettant de régler la longueur de travail de la canule d'irrigation.

Néanmoins, un réglage manuel est susceptible d'être erroné. Au surplus, dans le cas du traitement d'une dent présentant plusieurs canaux, l'irrigation de plusieurs canaux nécessite le réglage de la butée entre l'irrigation des différents canaux, ce qui est pénible pour le praticien.

Il est également connu de l'art antérieur des aiguilles graduées présentant une graduation, permettant au praticien de vérifier visuellement si l'aiguille a atteint la longueur de travail du canal considéré.

Néanmoins, ces graduations sont peu observables étant donné la localisation de l'aiguille au sein du canal, et la mesure est imprécise.

Il est également connu de l'art antérieur des aiguilles dont une pointe est munie d'une butée apicale, destinée à venir se placer contre l'apex du canal radiculaire. Une telle butée garantit que l'aiguille est bel et bien à la longueur de travail, puisque la pointe est située à l'apex.

En revanche, l'apex est une zone fragile du canal, et venir en appui à son encontre fait prendre le risque de le détériorer, et d'induire une perforation canalaire. En outre, si des débris sont présents dans le canal, alors ils seront tassés au niveau de l'apex par la butée apicale. Enfin, le contact apical empêche une bonne circulation du fluide au niveau de l'apex, alors que l'apex est l'endroit du canal dont la désinfection est primordiale.

## RÉSUMÉ

L'invention vise à pallier les inconvénients de l'art antérieur, en proposant une aiguille d'irrigation dont l'utilisation soit simplifiée et facilite l'irrigation du canal jusqu'au niveau de l'apex.

A cet effet, il a été mis au point une aiguille pour la diffusion d'une solution d'irrigation au sein d'un canal radiculaire d'une dent, le canal radiculaire s'étendant depuis une chambre pulpaire de la dent jusqu'à un apex d'une racine de la dent, le canal radiculaire ayant une forme tronconique présentant par une première conicité, l'aiguille comprenant un corps traversé par un conduit s'étendant selon un axe longitudinal du corps, le conduit reliant une extrémité proximale et une extrémité distale du corps, dans laquelle :

- l'extrémité proximale de l'aiguille est configurée pour être reliée à un distributeur de la solution d'irrigation, et
- l'extrémité distale de l'aiguille se termine par une pointe, et présente un orifice configuré pour distribuer la solution d'irrigation au sein du canal radiculaire.

Selon l'invention, l'extrémité distale présente une butée canalaire configurée pour venir en butée contre une surface interne du canal radiculaire lorsque l'aiguille est insérée au sein du canal radiculaire depuis la chambre pulpaire et en direction de l'apex, jusqu'à une position de blocage au sein du canal radiculaire, de manière que la pointe soit en retrait de l'apex selon un recul non nul, et de préférence inférieur à 5mm.

De cette manière, il existe une sécurité garantissant que la pointe de l'aiguille ne vienne pas en contact de l'apex, et le perfore. La valeur du recul peut être adaptée selon la conception de l'extrémité distale de l'aiguille et en particulier de l'orifice. Il est par exemple recommandé que le fluide soit distribué à environ 3mm de l'apex, pour garantir que sa distribution ne détériore pas l'apex, que ce soit par l'action fluidique de la distribution qui peut prendre la forme d'un jet, ou encore par l'action chimique de la solution d'irrigation qui endommage les tissus vivants.

En outre, la pointe de l'aiguille est fragile, en particulier lorsque l'aiguille est réalisée en plastique. Si la pointe vient buter contre l'apex, alors elle est susceptible de se déformer plastiquement, et l'orifice ne présente plus une géométrie adaptée pour la diffusion efficace du fluide. Le recul de l'aiguille selon l'invention garantit que la pointe ne peut pas venir en contact avec l'apex, ce qui garantit l'intégrité de l'orifice.

La butée canalaire constitue en outre un renforcement structurel de l'aiguille, en partie distale. La butée canalaire contribue donc à protéger l'aiguille de telles déformations.

De plus, le recul entre la pointe et l'apex assure que le fluide puisse venir nettoyer l'extrémité du canal radiculaire, au niveau de l'apex.

La butée étant disposée sur l'extrémité distale de l'aiguille, elle est située du côté apical du canal radiculaire, de sorte que la longueur de travail du canal n'a pas d'influence sur le positionnement correct de l'extrémité distale à proximité de l'apex au sein du canal radiculaire. Il est donc possible d'utiliser l'aiguille et d'irriguer efficacement le canal, sans nécessiter de vérifier la longueur de travail, ni de régler la position d'une bague en élastomère.

Il est entendu que le canal radiculaire ne suit pas nécessairement une trajectoire rectiligne, mais peut présenter une ou plusieurs courbures, et que la forme tronconique est définie par une succession de sections circulaires le long de l'axe curviligne du canal radiculaire, le diamètre des sections circulaires augmentant le long de l'axe curviligne. L'augmentation des diamètres définit la conicité de la forme tronconique.

Dans un mode de réalisation préféré, la butée présente un diamètre de butée défini par la formule Db = Da + (R+E)*C1, dans laquelle :

- Db est le diamètre de butée,
- Da est le diamètre d'une base circulaire de la forme tronconique du canal radiculaire,
- C1 est la première conicité de la forme tronconique du canal radiculaire, exprimée en pourcentage.
- R est le recul, distance mesurée selon l'axe longitudinal entre la base circulaire et la pointe lorsque l'aiguille est en position de blocage ;
- E est l'écart, distance mesurée selon l'axe longitudinal entre la pointe et la butée.

Ce mode de réalisation permet de définir les dimensions de la butée en fonction de la conicité du canal radiculaire, et de la position de la butée par rapport à la pointe.

Que la butée soit écartée de la pointe permet d'obtenir une butée de diamètre supérieur, ce qui la rend plus rigide. Son contact à l'encontre de la surface interne du canal radiculaire est plus franc, et la localisation de la position de blocage est mieux maîtrisée.

Toujours dans cet objectif de rigidification de la butée, la butée présente une longueur comprise entre 0,5 fois et 2 fois le diamètre de butée. De cette manière, la butée présente une rigidité suffisante pour positionner avec précision l'aiguille au sein du canal. La butée ne correspond pas à une collerette, dont l'épaisseur serait par exemple inférieure à 0,5 fois son diamètre. Une collerette est trop fine par rapport à son diamètre, et ne permet pas de maitriser la position de blocage de l'aiguille au sein du canal.

La butée canalaire doit être en position distale sur l'aiguille, c'est-à-dire que la butée est placée sur la moitié avant de l'aiguille, afin d'être du côté de l'apex lorsque l'aiguille est insérée dans le canal. De préférence, la butée canalaire est placée sur un premier tiers de l'aiguille, mesuré depuis la pointe de l'aiguille. L'écart est par exemple inférieur à 5mm, et de préférence inférieur à 3mm.

Dans le cas où le canal a déjà été mis en forme par un instrument canalaire tel qu'une lime endodontique, alors les paramètres de la forme tronconique (diamètre de base et conicité) sont connus car ils sont définis par la géométrie de l'instrument canalaire.

Afin que l'aiguille soit compatible avec une pluralité d'instruments de mise en forme canalaire, la butée présente une pluralité de diamètres de butée individuels, chacun disposé à un écart individuel. Ainsi, chaque couple de diamètre de butée individuel et d'écart individuel correspond à la conicité d'un instrument endodontique. La butée peut prendre une forme tronconique ou étagée.

Afin de faciliter la circulation du fluide au sein du canal radiculaire lorsque l'aiguille est en position de blocage, la butée présente un passage axial configuré pour permettre à du fluide distribué de passer de part et d'autre de la butée, au sein du canal.

Lorsque la butée présente un passage axial, l'orifice peut être situé entre la pointe et la butée. Ce mode de réalisation permet de distribuer le fluide à proximité de l'apex, tout en disposant d'un écart non nul entre la pointe et la butée en vue de pouvoir augmenter les dimensions donc la rigidité de la butée. En outre, disposer d'une butée de dimensions supérieures facilite l'intégration du passage axial sans amoindrir outre mesure la rigidité de la butée ou la précision de la position de blocage.

Afin d'éviter tout risque de mauvais placement de la butée sur l'aiguille, ce qui entraînerait une imprécision de la position de blocage, la butée est fixée de manière permanente sur le corps. De préférence, la butée est monobloc avec le corps, c'est à dire que la butée et le corps sont directement obtenus lors d'un procédé de fabrication de type injection ou surmoulage de l'aiguille.

Dans une optique de réduction de coûts, la butée et le corps sont monomatière, de sorte qu'ils peuvent être obtenus lors d'une seule étape d'injection.

En alternative, l'aiguille est obtenue par surmoulage d'un élément préfabriqué. Par exemple, l'extrémité distale est obtenue lors d'une première étape de fabrication, et présente au moins la pointe et la butée. Le reste du corps ainsi que l'extrémité proximale sont obtenus par surmoulage de l'extrémité distale. Ce mode de fabrication est adapté aux conceptions bi-matières, dans lesquels la pointe et la butée sont réalisées dans des matériaux plus rigides que le reste de l'aiguille.

Afin de prévenir l'application d'un effort axial trop important lorsque l'aiguille est insérée au sein du canal, le corps comprend une zone déformable selon l'axe longitudinal du corps. La zone déformable présente une raideur prédéterminée qui permet de tarer l'effort axial maximal que le praticien peut appliquer tout en respectant des conditions d'utilisation sécuritaires.

Afin de pouvoir s'insérer au sein de canaux radiculaires de courbure importante, le corps est réalisé en matériau élastiquement déformable, de préférence un matériau polymère tel que du polypropylène, ou du polyéthylène haute densité. L'aiguille est configurée pour se déformer élastiquement lorsqu'elle est insérée dans un canal courbe.

L'invention concerne également un kit de soin endodontique comprenant un instrument de mise en forme canalaire et une aiguille d'irrigation selon les caractéristiques précitées, l'instrument de mise en forme canalaire étant configuré pour conférer à un canal radiculaire non traité une géométrie tronconique présentant une base circulaire et une conicité prédéterminées. De cette manière, l'instrument de mise en forme canalaire et l'aiguille sont appairés de manière certaine, et les dimensions de la butée peuvent être spécifiquement adaptées à l'instrument de mise en forme canalaire.

BRÈVE DESCRIPTION DES FIGURES

Figure 1 est un schéma illustrant une aiguille d'irrigation selon l'invention, sur laquelle une butée est en retrait d'une pointe de l'aiguille.

Figure 2 est un schéma illustrant une telle aiguille insérée dans un canal radiculaire d'une dent, jusqu'à une position de blocage dans laquelle la butée vient à l'encontre d'une surface interne du canal radiculaire.

Figure 3 est un schéma illustrant la correspondance entre la forme tronconique d'un canal radiculaire de trajectoire curviligne avec une forme tronconique de trajectoire rectiligne.

Figure 4 est un schéma illustrant la correspondance entre un instrument endodontique de mise en forme canalaire, un canal radiculaire mis en forme par cet instrument, et une aiguille d'irrigation adaptée pour cet instrument endodontique.

Figure 5 est un schéma illustrant une aiguille d'irrigation dont la butée présente un passage axial, ainsi qu'une zone déformable.

Figure 6 est un schéma illustrant une aiguille configurée pour être compatible avec une pluralité de conicités.

Figure 7 est un schéma illustrant une aiguille dans laquelle la butée est au niveau de la pointe de l'instrument, et l'orifice est en retrait par rapport à la butée.

Figure 8 est un schéma illustrant une aiguille dans laquelle la butée est au niveau de la pointe de l'instrument, et l'orifice est au niveau de la butée.

Figure 9 est un schéma illustrant une section de l'aiguille selon l'orientation indiquée sur la figure 1, illustrant le passage axial ménagé au niveau de la butée.

DESCRIPTION DÉTAILLÉE

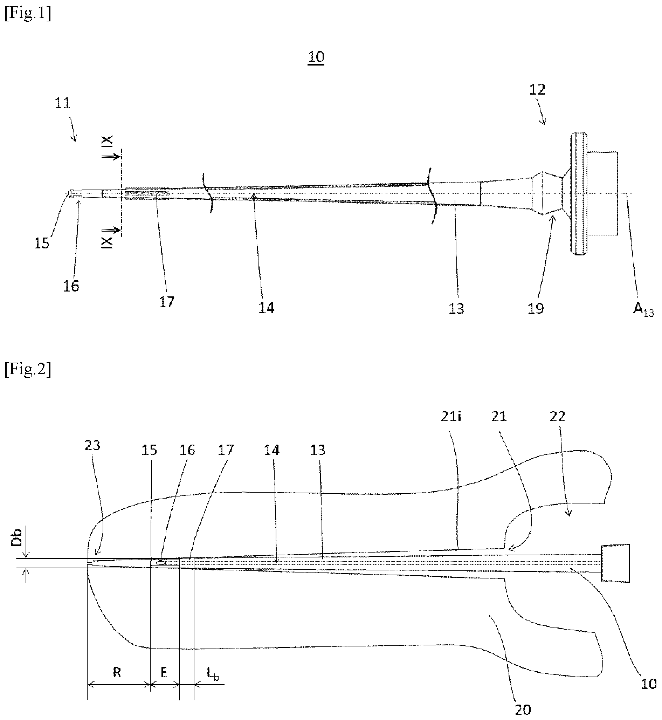

En référence à la figure 1, l'invention concerne une aiguille (10) d'irrigation présentant une extrémité proximale (12) configurée pour être reliée à un distributeur de la solution d'irrigation, et une extrémité distale (11) qui se termine par une pointe (15), et qui présente au moins un orifice (15) configuré pour distribuer la solution d'irrigation au sein d'un canal radiculaire (21).

Un corps (13), traversé par un conduit (14), relie l'extrémité proximale (12) à l'extrémité distale (11) selon un axe longitudinal (A13).

L'extrémité distale (11) présente en outre une butée (17), qui est configurée pour venir au contact d'une surface interne (21i) du canal radiculaire (21) lorsque l'aiguille (10) est insérée au sein du canal radiculaire (21) depuis la chambre pulpaire (22) et en direction de l'apex (23), afin de limiter l'insertion de l'aiguille (10) au sein du canal (21) dans une position de blocage.

Lorsque l'aiguille (10) se trouve dans la position de blocage, la pointe (15) est en retrait de l'apex (23) selon une distance non nulle dite « recul » (R).

En pratique, différentes tailles de butées (17) sont proposées au sein d'une gamme d'aiguilles (10), afin de s'adapter à différentes géométries canalaires.

Les géométries de canaux (21) non traités sont connues en soi par l'acquisition de données cliniques, et la gamme d'aiguille (10) comprend des butées (17) configurées pour correspondre aux géométries canalaires les plus courantes. Partant d'une radio de diagnostic, le praticien peut choisir, au sein de la gamme d'aiguilles (10), celle dont la butée (17) correspond au canal (21) à traiter.

L'irrigation des tissus intervenant dès le début du traitement endodontique, lorsqu'il y a encore des tissus au niveau de la chambre pulpaire (22), il est avantageux que l'aiguille (10) selon l'invention soit adaptée pour des canaux (21) non traités.

On rappelle que les dimensions anatomiques suivent des tendances connues. Par exemple, il est connu que les racines palatines des molaires supérieures sont plus volumineuses que celles d'autres dents. En particulier, les valeurs de dimensions canalaires chez l'homme ont fait l'objet d'études (voir « Microscopic investigations of root apexes » par KUTTLER, Y Y dans « the Journal of the American Dental Association », Vol 50, issue 5, p.544-552).

Ainsi, la personne du métier sait notamment que les limes 25.06 et 30.04 permettent de traiter environ 95% des canaux (21) de dents (20) d'adultes, puisque les dimensions des diamètres de bases (Da) sont relativement stables d'une personne à une autre.

La mesure qui est variable de manière plus significative est la longueur du canal radiculaire (21). C'est pourquoi le principe d'une butée (17) coopérant avec la partie distale du canal (21) est avantageuse, le positionnement de la pointe (15) de l'aiguille (10) ne dépendant pas de la longueur du canal (21).

Ensuite, une radiographie classique, en deux dimensions, permet de détecter si un canal (21) présente un diamètre de base (Da) hors-norme et anormalement élevé : il est donc possible, dans ce cas, de choisir des dimensions plus importantes pour la butée (17).

Enfin, quand bien même un doute devait subsister concernant les dimensions d'un canal (21) particulier et que la sécurité du soin est mise en cause, alors le praticien est tenu d'effectuer une imagerie en 3D de type « CBCT » selon l'anglicisme Cone Beam Computed Tomography (voir par exemple la recommandation « AAE and AAOMR Joint Position Statement - Use of Cone Beam Computed Tomography in Endodontics - 2015/2016 Update », émis par l'association américaine d'endodontistes (AAE) et par l'académie américaine de radiologie orale et maxillofaciale (AAOMR)). Le CBCT permet d'obtenir les dimensions du canal (21) investigué avec plus de précisions qu'avec une radiographie en deux dimensions.

Par conséquent, il est possible de choisir sans difficultés quelles dimensions conférer à la butée (17) pour qu'elle puisse coopérer avec un canal (21) à traiter.

La figure 2 illustre une aiguille (10) selon l'invention insérée au sein d'un canal radiculaire (21) jusqu'à la position de blocage : dans cette position, la butée (17) est en contact avec la surface interne (21i) du canal radiculaire (21) et empêche toute progression supplémentaire de l'aiguille (10).

Le recul entre la pointe (15) et l'apex (23) garantit la préservation de ce dernier ainsi que la non-détérioration de l'orifice (16).

Ainsi, la butée canalaire (17) selon l'invention permet de sécuriser le geste :

- en début de traitement, lorsque des tissus à traiter sont encore présents dans le canal (21) mais que l'aiguille (10) est déjà utilisée pour irriguer les tissus afin d'éviter la propagation de germes au sein du canal (21) lors du traitement : la butée (17) joue alors le rôle de renfort ;
- en fin de traitement, lorsque les tissus ont été ôtés du canal (21) et que l'aiguille (10) doit venir à proximité de l'apex (23), sans toutefois le détériorer : la butée (17) joue alors le rôle de positionnement de l'aiguille (10).

En fonction de la conception de l'aiguille (10), la butée (17) peut être disposée avec un écart (E) supplémentaire séparant la pointe (15) de l'aiguille (10).

Cet écart (E) supplémentaire peut être choisi en fonction des caractéristiques que l'on souhaite donner à l'orifice (16), ou encore à sa localisation.

Lorsque l'aiguille (10) est en position de blocage, il doit rester un interstice (i) entre le corps (13) et la surface interne (21i) du canal, de manière que le fluide puisse remonter en direction de la chambre pulpaire (22). Plusieurs solutions sont possibles, et éventuellement combinables entre elles :

- le corps (13) présente une seconde conicité (C2) qui est inférieure à la première conicité ;
- le corps (13) présente un diamètre de corps (13) qui est inférieur au diamètre de butée (17) ;
- le corps (13) présente des rainures longitudinales configurées pour permettre la remontée du fluide.

La butée (17) présente une longueur (Lb) destinée à conférer à la butée (17) la rigidité nécessaire pour empêcher la progression de l'aiguille (10) au sein du canal. La longueur (Lb) est comprise entre 0,5 fois et 2 fois le diamètre de butée (17). De préférence, la longueur (Lb) est comprise entre 1 fois et 1,5 fois le diamètre de butée (17).

La figure 2 illustre un canal (21) rectiligne, mais il est entendu que le canal (21) présente généralement une trajectoire curviligne.

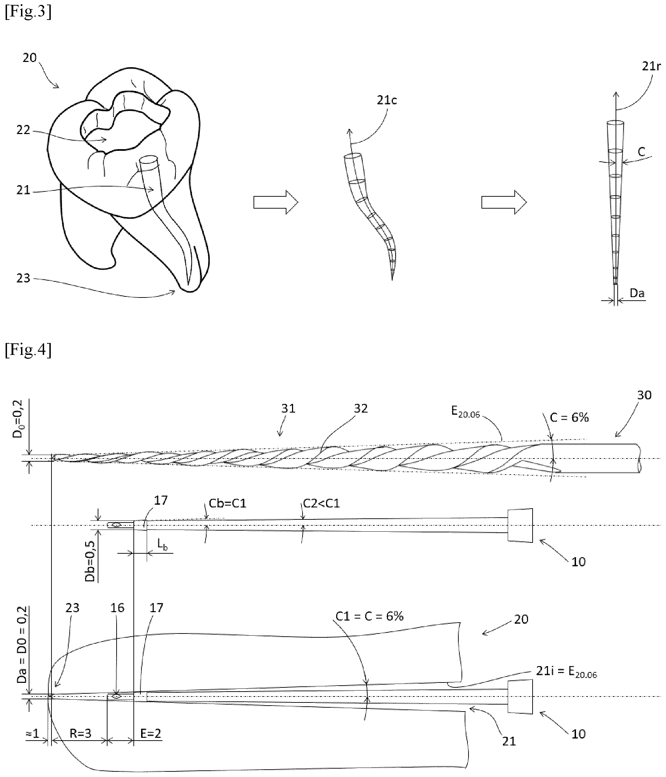

En référence à la figure 3, on illustre comment la géométrie tronconique d'un canal (21) curviligne peut être assimilée à la géométrie tronconique d'un canal (21) rectiligne. Partant de la géométrie du canal (21), on définit un axe curviligne (21c) dont l'origine est placée sur l'apex (23) du canal (21). On obtient la section du canal (21) pour une abscisse curviligne donnée, et on reporte cette section pour cette même abscisse le long d'un axe rectiligne (21r).

L'augmentation des sections le long de l'axe rectiligne (21r) définit la conicité (C) de la forme tronconique.

Il est entendu que dans le cas d'instruments à conicité (C) variable, on considère la conicité (C) au niveau où la butée (17) est destinée à venir en contact de la surface interne (21i) du canal. De préférence, il s'agit de la partie apicale du canal (21), à proximité de l'apex (23) (par exemple entre 2mm et 8mm de l'apex (23)).

Dans la suite du document, on n'illustre que des canaux (21) rectilignes afin de faciliter la compréhension des figures.

En référence à la figure 4, la géométrie d'un canal (21) traité est connue par la géométrie de l'instrument endodontique (30) utilisé pour effectuer le traitement du canal (21) : les instruments endodontiques (30) comprennent une partie active (31) munie de lèvres de coupe (32) et sont entraînés en rotation afin d'éliminer les tissus du canal radiculaire (21).

Les dimensions de l'instrument endodontique (30) étant connues, il est aisé de dimensionner la butée (17) de manière qu'elle vienne en contact de la surface interne (21i) du canal radiculaire (21), avec un recul (R) choisi.

Le dimensionnement de la butée (17) peut prendre en compte le déplacement canalaire attendu lors du traitement, c'est-à-dire la légère différence de dimension qu'il peut y avoir entre l'instrument endodontique (30) et le canal (21) une fois qu'il a été mis en forme : le canal (21) peut présenter une géométrie légèrement supérieure à celle de l'instrument endodontique (30).

Dans l'exemple illustré, partant d'un instrument endodontique (30) dont le diamètre de pointe ($D_0$) vaut 20 centièmes (soit 0,2mm) et la conicité (C) est de 6%, sa rotation définit une enveloppe $E_{20.06}$ connue.

La géométrie des lèvres de coupe (32) de l'instrument endodontique (30) ou encore la section de l'instrument endodontique (30) ne sont pas prépondérants pour définir quel cône de gutta percha utiliser à l'issue du traitement afin d'obturer le canal (21). On utilise généralement la géométrie tronconique de l'instrument endodontique (30) pour choisir la bonne dimension de cône de gutta-percha.

Aussi les dimensions d'un instrument endodontique (30) sont généralement résumées à son diamètre de pointe (D0) (exprimée en centièmes de millimètre) et à sa conicité (C) (exprimée en pourcentage). L'instrument endodontique (30) illustré est donc généralement dénommé sous l'appellation générique « 20.06 » ou « 20/06 » selon la norme ISO 3630-1.

On note que les instruments endodontiques (30) présentent toujours une conicité (C) non-nulle au niveau de leur extrémité distale (11), leur permettant d'atteindre l'apex (23) du canal radiculaire (21).

Sur la figure 4, l'utilisation de l'instrument 20.06 au sein du canal (21) va l'usiner et donner à sa surface interne (21i) la même géométrie que l'enveloppe $E_{20.06}$, c'est-à-dire une forme tronconique de base circulaire de diamètre 0,2mm et de conicité 6%, en considérant un déplacement canalaire négligeable.

On rappelle que si la trajectoire du canal (21) est curviligne, l'instrument endodontique (30) va se déformer et s'adapter à cette trajectoire curviligne, et qu'on assimile une forme tronconique 20.06 curviligne à une forme tronconique 20.06 rectiligne.

Dans l'exemple illustré, la géométrie 20.06 de l'instrument endodontique (30) fournit :

- Da=0,2mm
- C1=6%.

Le recul (R) désiré étant de 3mm (R=3mm), et l'écart (E) valant 2mm (E=2mm), la formule Db = Da + (R+E)*C1 fournit un diamètre de buse Db de 0,5mm.

Partant de cette formule, il est aisé de proposer une gamme d'aiguilles (10) correspondant aux standards d'instruments endodontiques (30) du marché.

On rappelle que le recul (R) est non-nul afin que l'apex (23) et l'orifice (16) soient préservés. Le recul (R) est de préférence inférieur à 5 millimètres pour garantir que l'irrigation soit efficace jusqu'à l'apex (23) du canal (21), l'orifice (16) étant proche de la pointe (15) :

- Un recul (R) de 3mm est particulièrement préféré dans le cas d'un conduit (14) débouchant à l'extrémité de l'aiguille (10) (ouverture apicale).
- Un recul (R) de 1mm est particulièrement préféré dans le cas d'un conduit (14) débouchant latéralement sur l'aiguille (10) (ouverture latérale).

Pour garantir la précision de la position de blocage, il est intéressant de réduire l'écart (E) séparant la pointe (15) de la butée (17). En effet, plus l'écart (E) est important :

- plus la valeur nominale de l'intervalle de tolérance entre la pointe (15) et la butée (17), inhérent aux contraintes de fabrication ou de montage, est élevé ;
- plus la géométrie réelle du canal (21) risque de s'éloigner de la géométrie attendue et pour laquelle la butée (17) a été conçue (différence anatomique dans le cas d'un canal (21) non-traité, déplacement canalaire dans le cas d'un canal (21) traité).

Aussi, un écart (E) inférieur à 10mm est préféré.

Sur la figure 4, on remarque enfin que la longueur de référence est mesurée à partir d'environ 1mm à partir de l'apex (23), afin de préserver le foramen de la dent (20), selon la pratique usuelle en endodontie.

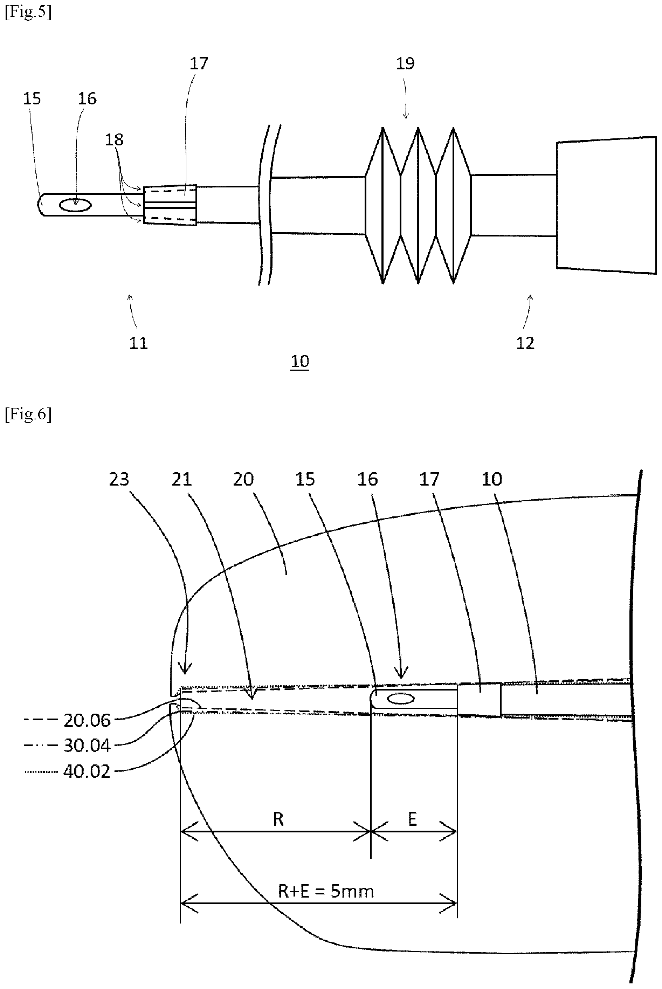

La figure 5 illustre un schéma d'une aiguille (10) présentant deux caractéristiques, indépendantes l'une de l'autre :

- la présence d'un passage axial (18) sur la butée (17), et
- la présence d'une zone déformable (19) sur l'extrémité proximale (12) de l'aiguille (10).

Le passage axial (18) permet au fluide d'irrigation de franchir la butée (17) lorsque l'aiguille (10) est en position de blocage : la butée (17) étant en contact avec la surface interne (21i) du canal radiculaire (21), elle obture l'interstice (i) et s'oppose à la remontée du fluide.

L'irrigation étant accompagnée de mouvements de va-et-vient au sein du canal (21), l'irrigation se produit également lorsque la butée (17) n'est pas en contact. Ainsi, la présence du passage axial (18) n'est pas impérative.

Néanmoins, le passage axial (18) facilite la remontée du fluide, et éventuellement des débris présents dans le canal (21).

Le passage axial (18) peut également éviter la création d'une zone de surpression du fluide lorsque l'orifice (16) est situé entre la butée (17) et l'apex (23), lorsque l'aiguille (10) est en position de blocage. Une telle surpression pourrait conduire du fluide à s'échapper via le foramen de l'apex (23), en direction du tissu périapical.

Le passage axial (18) peut prendre la forme d'une ou plusieurs rainures longitudinales, ménagées sur la périphérie de la butée (17).

La zone déformable (19) est une sécurité à l'encontre d'efforts axiaux trop importants que peut exercer le praticien lors de l'insertion de l'aiguille (10). Dans ce cas, il y aurait un risque de forcer l'aiguille (10) à progresser au-delà de la position de blocage, par exemple par écrasement de la butée (17).

La zone déformable (19) permet de tarer l'effort maximal que peut exercer le praticien tout en respectant les contions d'usage prévues, car la zone déformable (19) présente une raideur similaire à celle d'un ressort de compression. La relation entre la course de déformation de la zone déformable (19) et l'effort de compression équivalent permet le tarage désiré.

La zone déformable (19) peut être située au niveau de l'extrémité proximale (12), où l'encombrement disponible pour la conception de la zone déformable (19) est plus important.

Le praticien pouvant désirer courber le corps (13) de l'aiguille (10), afin de faciliter l'accès au canal (21), la zone déformable (19) peut également être située au niveau de l'extrémité distale (11).

Une conception judicieuse de la butée (17) permet d'obtenir une aiguille (10) qui soit compatible avec plusieurs géométries d'instruments canalaires (30), permettant ainsi :

- de mutualiser les outils de fabrication, donc de réduire le coût d'une aiguille (10) ; et
- de simplifier la gestion du stock de matériel pour le praticien.

En référence à la figure 4, on constate que trois références d'instruments 20.06, 30.04, 40.02 présentent un même diamètre ($D_5$) à une distance de 5mm de leur extrémité. En proposant une aiguille (10) avec une butée (17) avec un diamètre de butée (Db) de 0,5mm, on obtient pour chacune de ces trois références une distance R+E de 5mm.

Il est donc possible d'ajuster le recul (R) en relation avec l'écart (E), de manière à obtenir la position de la pointe (15) et la position de l'orifice (16) désirées, tout en conservant une aiguille (10) qui puisse fonctionner pour ces trois familles d'instruments.

Partant de ce constat, il est possible d'inverser la formule proposée afin de déterminer, pour un diamètre de butée (17) donné, quelle serait la position de blocage de l'aiguille (10) au sein d'un canal (21) présentant un diamètre de base (Da) et une conicité (C) connus :

$$R + E = \frac{Db - Da}{c}$$, dans laquelle :

- R est le recul (R) et E l'écart (E) ;
- Db est le diamètre de butée (17) ;
- Da est le diamètre de la base circulaire de la forme tronconique,

- c est la conicité, et est non nulle.

Toujours avec un exemple de diamètre de butée (Db) de 0,5mm, on obtient les valeurs suivantes :

[Table 1]

| Da | C1 | R+E |
|----|-----|-----|
| 20 | 6% | 5,0 |
| 25 | 4% | 6,3 |
| 25 | 6% | 4,2 |
| 30 | 4% | 5,0 |
| 35 | 4% | 3,8 |
| 40 | 2% | 5,0 |

On voit qu'il est possible de proposer une aiguille (10) avec diamètre de butée (Db) de 0,5mm :

- pour des formes tronconiques 20.06, 30.04 et 40.02, avec une précision théorique de la position de blocage égale à 0 (R+E vaut 5mm dans tous les cas) ; ou
- pour des formes tronconiques 20.06, 25.06, 30.04 et 40.02, avec une précision théorique de la position de blocage égale à ± 0,4mm (R+E varie de 0,8mm au maximum) ; ou
- pour des formes tronconiques 20.06, 25.04, 25.06, 30.04, 35.04 et 40.02, avec une précision théorique de la position de blocage égale à ± 1,25mm (R+E varie de 2,5mm au maximum).

En fonction de la précision théorique désirée pour la position de blocage, il est possible de concevoir des aiguilles (10) compatibles avec une gamme d'instruments endodontiques (30).

Cette gamme peut encore être étendue si la butée (17) présente une forme tronconique ou un épaulement, de sorte qu'elle présente une pluralité de diamètre de butée (Db), chacun correspondant à un écart (E) différent.

Dans cette même optique, une aiguille (10) peut présenter plusieurs butées (17), à des valeurs d'écart (E) différentes.

Il peut être intéressant de fournir au praticien un kit de soin, comprenant :

- un instrument endodontique (30) de mise en forme canalaire présentant un diamètre de pointe (D0) et une conicité (C) déterminés,
- l'aiguille (10) d'irrigation correspondant à cet instrument endodontique (30).

De cette manière, le dimensionnement de la butée (17) est effectué sur la base de l'instrument endodontique (30) connu, le bon fonctionnement de l'aiguille (10) est garanti, la gestion du stock de matériel est facilitée pour le praticien.

La position exacte de l'orifice (16) par rapport à la pointe (15) ou par rapport à la butée (17) n'est pas primordiale pour la mise en œuvre de l'invention. Aussi la position de l'orifice (16) peut être adaptée selon sa propre géométrie, le type de fluide utilisé ou les moyens de diffusion (par exemple une pression manuelle sur le piston d'une seringue ou une pompe électrique).

Les figures 1, 2 et 4-6 illustrent un orifice (16) disposé entre la pointe (15) et la butée (17), ce qui permet d'obtenir :

- un orifice (16) situé à proximité de la valeur de recul (R) désirée, ce qui garantit l'efficacité de l'irrigation,
- une butée (17) avec un diamètre de butée (Db) supérieur, ce qui peut par exemple faciliter l'intégration d'un passage axial (18) en son sein.

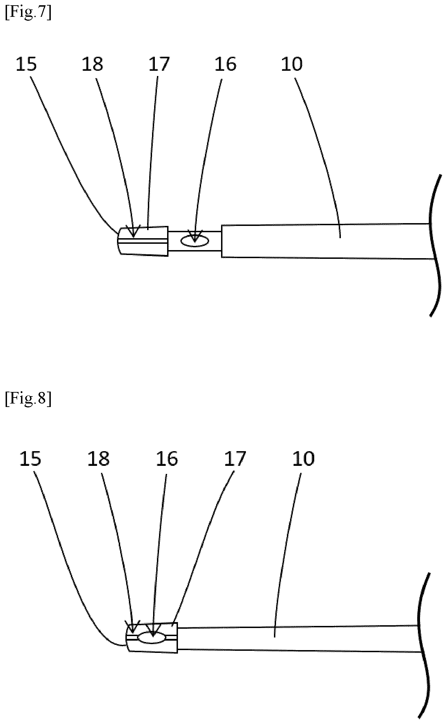

La figure 7 illustre un autre mode de réalisation dans lequel la butée (17) est au-delà de l'orifice (16). Dans ce mode, la valeur de l'écart (E) est nulle. La valeur du recul (R) est néanmoins strictement positive.

La figure 8 illustre un autre mode de réalisation dans lequel l'orifice (16) est localisé au niveau de la butée (17). Sur la figure 8, la valeur de l'écart (E) est nulle.

Les butées (17) illustrées sur les figures 7 et 8 présentent un passage axial (18), mais cette caractéristique est indépendante de la position de l'orifice (16) ou de la valeur de l'écart (E).

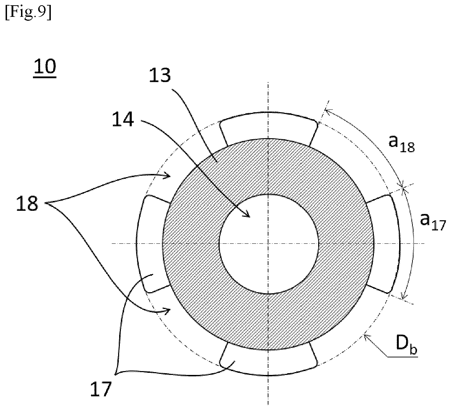

La figure 9 illustre un passage axial (18) comprenant quatre rainures régulièrement réparties sur la périphérie de la butée (17). Les secteurs angulaires de rainures ($a_{18}$) et des butées ($a_{17}$) définissent des portions de couronne qui correspondent respectivement :

- à des sections de butée ($S_{17}$), destinées à arrêter la progression de l'aiguille (10) au sein du canal (21) ;
- à des sections de passage axial ($S_{18}$), destinées à faciliter le passage du fluide.

Les secteurs angulaires sont déterminés de manière à équilibrer les sections de butée ($S_{17}$) et les sections de passage de fluide ($S_{18}$). Ainsi, la section de passage ($S_{18}$) vaut entre 0,5 fois et 1,5 fois la section de butée ($S_{17}$).

On rappelle que si la conception de la butée (17) est facilitée par son appairage avec un instrument endodontique (30) prédéterminé, l'invention réside dans le fait de rendre possible le blocage de l'aiguille (10) par un contact mécanique au sein du canal radiculaire (21), que celui-ci soit traité ou non.

Les typologies et les géométries de canaux (21) radiculaires non traités peuvent être différentes (section non circulaire par exemple), mais la connaissance d'un corpus de canaux (21) non traités de dents permet de déduire les limitations à apporter aux dimensions et à la forme d'une butée (17) d'une aiguille (10) pour un type de canal (21), ou encore de butées (17) d'une gamme d'aiguilles (10) pour différents types de canaux (21).

Sans tenir compte du passage axial (18) ménagé pour le fluide, une forme de révolution, par exemple cylindrique ou tronconique, est préférée pour la butée (17) afin que l'orientation de l'aiguille (10) par rapport au canal (21) ne soit pas essentielle.

D'autres formes de butées (17) peuvent néanmoins être envisagées, telle qu'une forme parallélépipédique par exemple. Dans ce cas, la géométrie d'une base de la butée (17) et la longueur (Lb) sont adaptées pour garantir le coincement de l'aiguille (10) dans la position de blocage.

Enfin, les caractéristiques techniques des différents modes de réalisation et variantes mentionnés ci-dessus peuvent être, en totalité ou pour certaines d'entre elles, combinées entre elles. Ainsi, l'aiguille (10) peut être adaptée en termes de coût, de fonctionnalités et de performance.

**Revendications**

1.　Aiguille (10) pour la diffusion d'une solution d'irrigation au sein d'un canal radiculaire (21) d'une dent (20), le canal radiculaire (21) s'étendant depuis une chambre pulpaire (22) de la dent (20) jusqu'à un apex (23) d'une racine de la dent (20), le canal radiculaire (21) ayant une forme tronconique présentant par une première conicité (C1), l'aiguille (10) comprenant un corps (13) traversé par un conduit (14) s'étendant selon un axe longitudinal (A13) du corps (13), le conduit (14) reliant une extrémité proximale (12) et une extrémité distale (11) du corps (13), dans laquelle :

　　- l'extrémité proximale (12) de l'aiguille (10) est configurée pour être reliée à un distributeur de la solution d'irrigation, et
　　- l'extrémité distale (11) de l'aiguille (10) se termine par une pointe (15), et présente au moins un orifice (16) configuré pour distribuer la solution d'irrigation au sein du canal radiculaire (21),

　　**caractérisé en ce que** l'extrémité distale (11) présente une butée (17) configurée pour venir en butée contre une surface interne (21i) du canal radiculaire (21) lorsque l'aiguille (10) est insérée au sein du canal radiculaire (21) depuis la chambre pulpaire (22) et en direction de l'apex (23), jusqu'à une position de blocage au sein du canal radiculaire (21), de manière que la pointe (15) soit en retrait de l'apex (23) selon un recul (R) non nul.

2.　Aiguille (10) selon la revendication 1, dans laquelle la butée (17) présente un diamètre de butée (17) défini par Db = Da + (R+E)*C1, dans laquelle :

- Db est le diamètre de butée ;
- Da est le diamètre d'une base circulaire de la forme tronconique du canal radiculaire (21) ;
- C1 est la première conicité de la forme tronconique du canal radiculaire (21), exprimée en pourcentage ;
- R est le recul, distance mesurée selon l'axe longitudinal (A13) entre la base circulaire et la pointe (15), lorsque l'aiguille (10) est en position de blocage ;
- E est un écart, distance mesurée selon l'axe longitudinal (A13) entre la pointe (15) et la butée (17).

3. Aiguille (10) selon la revendication 2, dans laquelle la butée (17) présente une pluralité de diamètres de butée (Db) individuels, chacun disposé à un écart (E) individuel.

4. Aiguille (10) selon l'une des revendications précédentes, dans laquelle la butée (17) présente un passage axial (18) configuré pour permettre à du fluide distribué de passer de part et d'autre de la butée (17), au sein du canal (21), lorsque l'aiguille (10) est en position de blocage.

5. Aiguille (10) selon la revendication 4, dans laquelle l'orifice (16) est situé entre la pointe (15) et la butée (17).

6. Aiguille (10) selon l'une des revendications précédentes, dans laquelle la butée (17) est monobloc avec le corps (13).

7. Aiguille (10) selon la revendication 6, dans laquelle la butée (17) et le corps (13) sont monomatière.

8. Aiguille (10) selon l'une des revendications précédentes, dans laquelle le corps (13) comprend une zone déformable (19) selon l'axe longitudinal (A13) du corps (13), et présentant une raideur et une course de déformation prédéterminés.

9. Aiguille (10) selon l'une des revendications précédentes, dans laquelle la butée (17) présente une longueur (Lb) comprise entre 0,5 fois et 2 fois le diamètre de butée (Db).

10. Kit de soin endodontique comprenant un instrument endodontique de mise en forme canalaire (30) et une aiguille (10) d'irrigation selon l'une des revendications précédentes, l'instrument de mise en forme canalaire (30) étant configuré pour conférer à un canal radiculaire (21) non traité une géométrie tronconique présentant une base circulaire et une conicité prédéterminées.

[Fig.1]

<u>10</u>

11

12

15

16

17

14

13

19

$A_{13}$

[Fig.2]

23  15  16  17  14  13  21i  21  22

Db

R  E  $L_b$

10

20

[Fig.3]

[Fig.4]

[Fig.5]

10

[Fig.6]

- - - 20.06
- · - 30.04
········ 40.02

R + E = 5mm

[Fig.7]

15    18    17    16    10

[Fig.8]

15    18    16    17    10

[Fig.9]

# EP 4 616 824 A1

Europäisches
Patentamt

European
Patent Office

Office européen
des brevets

## RAPPORT DE RECHERCHE EUROPEENNE

Numéro de la demande

EP 25 16 3620

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2018/250106 A1 (GEHRIG NICOLAS [CH] ET AL) 6 septembre 2018 (2018-09-06) | 1,6,7,10 | INV. A61C5/50 |
| Y | * alinéas [0007], [0028], [0037]-[0038]; | 8 | |
| A | figures 1, 6 * | 2-5,9 | |
| | ----- | | |
| X | KR 100 762 889 B1 (LEE KWANG SUK [KR]) 4 octobre 2007 (2007-10-04) | 1-7,9 | |
| Y | * figures 5, 9-11; | 8 | |
| A | alinéas [0030] - [0039] * | 10 | |
| | ----- | | |
| Y | WO 2018/142554 A1 (BETHEL CO LTD [JP]) 9 août 2018 (2018-08-09) * alinéas [0012] - [0049]; figures 1-10 * | 8 | |
| | ----- | | |

|  |
|---|
| DOMAINES TECHNIQUES RECHERCHES (IPC) |
| A61C |

Le présent rapport a été établi pour toutes les revendications

| Lieu de la recherche | Date d'achèvement de la recherche | Examinateur |
|---|---|---|
| Munich | 29 juillet 2025 | Pisseloup, Arnaud |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................
& : membre de la même famille, document correspondant

EPO FORM 1503 03.82 (P04C02)

15

## ANNEXE AU RAPPORT DE RECHERCHE EUROPEENNE
## RELATIF A LA DEMANDE DE BREVET EUROPEEN NO.

EP 25 16 3620

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-07-2025

| Document brevet cité au rapport de recherche | Date de publication | Membre(s) de la famille de brevet(s) | Date de publication |
|---|---|---|---|
| US 2018250106 A1 | 06-09-2018 | EP 3349682 A1 | 25-07-2018 |
| | | JP 2018527126 A | 20-09-2018 |
| | | US 2018250106 A1 | 06-09-2018 |
| | | WO 2017045714 A1 | 23-03-2017 |
| KR 100762889 B1 | 04-10-2007 | AUCUN | |
| WO 2018142554 A1 | 09-08-2018 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **KUTTLER, Y Y**. Microscopic investigations of root apexes. *Journal of the American Dental Association*, vol. 50 (5), 544-552

- AAE and AAOMR Joint Position Statement - Use of Cone Beam Computed Tomography in Endodontics. association américaine d'endodontistes (AAE) et par l'académie américaine de radiologie orale et maxillofaciale (AAOMR), 2015